# EUROPEAN PATENT APPLICATION

(11) **EP 3 541 048 A1**
(43) Date of publication of application: **18.09.2019**
(21) Application number: 17877361.0
(22) Date of filing: 13.07.2017
(51) Int. Cl.: H04L 29/08, H04L 12/24

(54) **METHOD AND APPARATUS FOR DETERMINING MAIN SCHEDULER FROM CLOUD COMPUTING SYSTEM**

(30) Priority: 30.11.2016 CN 201611089191
(71) Applicant: Huawei Technologies Co., Ltd., Longgang District Shenzhen, Guangdong 518129 (CN)
(72) Inventor: LIU, Lili, Shenzhen, Guangdong 518129 (CN)
(74) Representative: Goddar, Heinz J.
(86) International application number: PCT/CN2017/092854
(87) International publication number: WO 2018/099090

(57) **Abstract**

This application discloses a method and an apparatus for determining a primary scheduler from a cloud computing system. The cloud computing system includes at least an arbiter and multiple schedulers, each scheduler is corresponding to one scheduling policy, and the method includes: receiving, by the arbiter, vote information sent by at least one scheduler, where the vote information is generated by the scheduler according to a current load status of the cloud computing system and a preset correspondence between a load status and vote information; and determining, by the arbiter, a primary scheduler from the multiple schedulers according to the vote information sent by the at least one scheduler, so that the primary scheduler performs, according to a corresponding scheduling policy, scheduling on a computing resource in the cloud computing system, where the scheduling policy corresponding to the primary scheduler matches the current load status of the cloud computing system. By using the method and the apparatus of the present invention, a computing resource allocation collision between different schedulers can be avoided.

## Description

This application claims priority to Chinese Patent Application No. 201611089191.9, filed with the Chinese Patent Office on November 30, 2016 and entitled "METHOD AND APPARATUS FOR DETERMINING PRIMARY SCHEDULER FROM CLOUD COMPUTING SYSTEM", which is incorporated herein by reference in its entirety.

### TECHNICAL FIELD

The present invention relates to the field of cloud computing technologies, and in particular, to a method and an apparatus for determining a primary scheduler from a cloud computing system.

### BACKGROUND

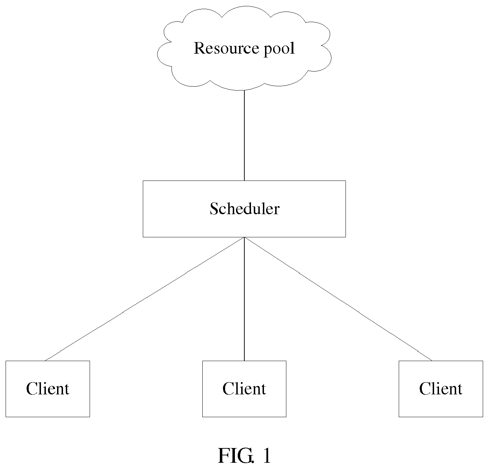

Cloud computing emerges as the Internet rapidly develops. The cloud computing is a computing mode. As shown in FIG. 1, a whole cloud computing system mainly includes a client, a scheduler, and a resource pool. The scheduler can receive a request of the client, and schedule, according to the request of the client, a computing resource in the resource pool for the client to use.

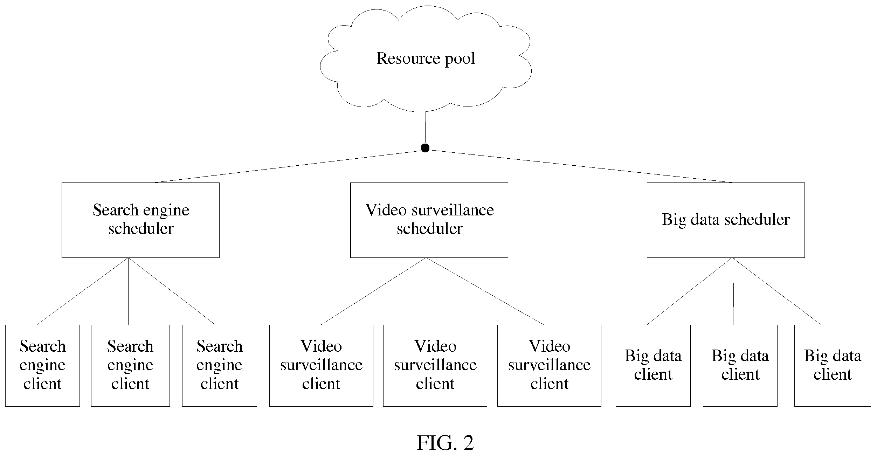

Currently, a single scheduler is usually used in the cloud computing system shown in FIG. 1, that is, there is only one scheduler in the cloud computing system. However, as the cloud computing system bears increasing types of services, the scheduler in the cloud computing system also gradually evolves from a single scheduler to multiple schedulers. In the cloud computing system with multiple schedulers, each scheduler is corresponding to one scheduling policy, and is responsible for one type of service. For example, a cloud computing system bears three types of services: search engine, video surveillance, and big data. Therefore, as shown in FIG. 2, a whole cloud computing system may have three schedulers: a search engine scheduler, a video surveillance scheduler, and a big data scheduler. Correspondingly, the search engine scheduler is corresponding to a search engine scheduling policy, and is responsible for managing a service of a search engine client, that is, the search engine scheduler receives a service request of the search engine client and schedules a computing resource in a resource pool for the search engine client. Likewise, the video surveillance scheduler is corresponding to a video surveillance scheduling policy, and is responsible for a service of a video surveillance client. The big data scheduler is corresponding to a big data scheduling policy, and is responsible for a service of a big data client. Details are not described herein.

In actual application, in a cloud computing system with multiple schedulers, different schedulers are independent of each other and share computing resources in a resource pool. Therefore, the foregoing method may cause a computing resource allocation collision between different schedulers. Still in the example shown in FIG. 2, when the search engine scheduler receives a service request of the search engine client, a computing resource M in the resource pool is allocated to the search engine client. Because the search engine scheduler is independent of the big data scheduler, it is possible that the computing resource M in the resource pool is also allocated to the big data client when a big data server receives a service request of the big data client, and consequently a computing resource allocation collision is caused.

### SUMMARY

Embodiments of the present invention provide a method and an apparatus for determining a primary scheduler from a cloud computing system, to avoid a computing resource allocation collision between different schedulers.

According to a first aspect, a method for determining a primary scheduler from a cloud computing system is provided. The cloud computing system includes at least an arbiter and multiple schedulers, each scheduler is corresponding to one scheduling policy, and the method includes: receiving, by the arbiter, vote information sent by at least one scheduler, where the vote information is generated by the scheduler according to a current load status of the cloud computing system and a preset correspondence between a load status and vote information, the vote information is vote information of a current scheduler that is at least one scheduler in the multiple schedulers, and the vote information may be specifically an identifier of a voted scheduler or a score of a voted scheduler; and determining, by the arbiter, a primary scheduler from the multiple schedulers according to the vote information sent by the at least one scheduler, so that the primary scheduler performs, according to a corresponding scheduling policy, scheduling on a computing resource in the cloud computing system, where the scheduling policy corresponding to the primary scheduler matches the current load status of the cloud computing system.

With reference to the first aspect, in a first possible implementation, the selecting, by the arbiter, a primary scheduler from the multiple schedulers according to the vote information sent by the at least one scheduler includes: determining, by the arbiter, a vote score of each scheduler according to the vote information sent by the at least one scheduler; and determining, by the arbiter from the multiple schedulers, a scheduler whose vote score satisfies a preset condition as the primary scheduler. In this embodiment of the present invention, a scheduler that satisfies the preset condition may be selected as the primary scheduler, and the primary scheduler can perform, according to its corresponding scheduling policy, scheduling on the whole cloud computing system. Therefore, a user may select different schedulers as the primary scheduler by setting different preset conditions, so that the user can flexibly select the primary scheduler according to a requirement in this embodiment of the present invention.

With reference to the first possible implementation of the first aspect, in a second possible implementation, different priorities are preset for different schedulers, and the determining, by the arbiter, a vote score of each scheduler according to the vote information sent by the at least one scheduler includes: setting, by the arbiter, different weights for vote information of all schedulers according to priorities of all the schedulers; and determining, by the arbiter, the vote score of each scheduler according to vote information obtained by each scheduler and a weight of each piece of vote information. By using the foregoing method, priorities may be allocated for different schedulers, so that a vote score occupied by a scheduler with a high priority has a relatively large weight, and this further enables a vote score counting manner to be more practical.

With reference to the first possible implementation of the first aspect, in a third possible implementation, the determining, by the arbiter, a vote score of each scheduler according to the vote information sent by the at least one scheduler includes:
determining, by the arbiter for a scheduler, whether the current scheduler votes for another scheduler, where the another scheduler is a remaining scheduler in the cloud computing system other than the current scheduler; and when determining that the current scheduler votes for another scheduler, counting, by the arbiter, a vote score of the current scheduler, or when determining that the current scheduler does not vote for another scheduler, determining, by the arbiter, that the vote score of the current scheduler is zero. The foregoing method can avoid that a scheduler with a high priority is always elected as the primary scheduler.

With reference to the first possible implementation of the first aspect, in a fourth possible implementation, the determining, by the arbiter, a vote score of each scheduler according to the vote information sent by the at least one scheduler includes directly counting, by the arbiter, the vote score of each scheduler. In the foregoing manner, the score of each scheduler can be quickly determined.

With reference to any one of the first aspect or the first to the fourth possible implementations of the first aspect, the method further includes: receiving, by the arbiter, a re-election request sent by a secondary scheduler, where the secondary scheduler is another scheduler in the cloud computing system other than the primary scheduler, and the re-election request is sent by the secondary scheduler when scheduling performed by the current primary scheduler on a computing resource in the cloud computing system does not satisfy a preset condition; and when a proportion of the secondary scheduler that sends the re-election request satisfies a preset condition, sending, by the arbiter, a re-election instruction to all the schedulers, so that all the schedulers re-vote according to the current load status of the cloud computing system. By using the foregoing method, the primary scheduler may be re-selected when the current load status of the cloud computing system does not match the primary scheduler, so that the selected primary scheduler always matches a load status of the cloud computing system.

According to a second aspect, a method for determining a primary scheduler from a cloud computing system is provided. The cloud computing system includes at least an arbiter and multiple schedulers, each scheduler is corresponding to one scheduling policy, and the method includes: determining, by the scheduler, a current load status of the cloud computing system; determining, by the scheduler, vote information according to the current load status of the cloud computing system and a preset correspondence between a load status and vote information, where in the current load status of the cloud computing system, a scheduler corresponding to a vote result determined according to vote information of the multiple schedulers is a scheduler that matches the current load status; and sending, by the scheduler, the vote information to the arbiter, so that the arbiter determines a primary scheduler according to the vote information, where the primary scheduler is configured to perform, according to a corresponding scheduling policy, scheduling on a computing resource in the cloud computing system. By using the foregoing method, each scheduler can select a scheduler that matches the current load status, and report vote information for the matched scheduler, so that the primary scheduler selected by the arbiter matches the load status of the whole cloud computing system.

With reference to the second aspect, in a first possible implementation of the second aspect, the method further includes: periodically collecting, by the scheduler, a load status of the cloud computing system; and when a current load status of the cloud computing system does not satisfy a preset condition, reporting, by the scheduler, re-vote information to the arbiter, so that the arbiter triggers, according to the re-vote information, all schedulers in the cloud computing system to re-send vote information. By using the foregoing method, the primary scheduler may be re-selected when the current load status of the cloud computing system does not match the primary scheduler, so that the selected primary scheduler always matches a load status of the cloud computing system.

According to a third aspect, an apparatus for determining a primary scheduler from a cloud computing system is provided. The cloud computing system includes at least multiple schedulers, each scheduler is corresponding to one scheduling policy, and the apparatus includes: a receiving unit, configured to receive vote information sent by at least one scheduler, where the vote information is generated by the scheduler according to a current load status of the cloud computing system and a preset correspondence between a load status and vote information; the vote information is vote information of a current scheduler that is at least one scheduler in the multiple schedulers, and the vote information may be specifically an identifier of a scheduler that the current scheduler votes for or a score of a scheduler that the current scheduler votes for; and a selection unit, configured to determine a primary scheduler from the multiple schedulers according to the vote information sent by the at least one scheduler, so that the primary scheduler performs, according to a corresponding scheduling policy, scheduling on a computing resource in the cloud computing system, where the scheduling policy corresponding to the primary scheduler matches the current load status of the cloud computing system. With reference to the third aspect, in a first possible implementation of the third aspect, the selection unit is specifically configured to: determine a vote score of each scheduler according to the vote information sent by the at least one scheduler; and determine, from the multiple schedulers, a scheduler whose vote score satisfies a preset condition as the primary scheduler. In this embodiment of the present invention, a scheduler that satisfies the preset condition may be selected as the primary scheduler, and the primary scheduler can perform, according to its corresponding scheduling policy, scheduling on the whole cloud computing system. Therefore, a user may select different schedulers as the primary scheduler by setting different preset conditions, so that the user can flexibly select the primary scheduler according to a requirement in this embodiment of the present invention.

With reference to the first possible implementation of the third aspect, in a second possible implementation of the third aspect, different priorities are preset for different schedulers, and when determining the vote score of each scheduler according to the vote information sent by the at least one scheduler, the selection unit is specifically configured to: set different weights for vote information of all schedulers according to priorities of all the schedulers; and determine the vote score of each scheduler according to vote information obtained by each scheduler and a weight of each piece of vote information. By using the foregoing method, priorities may be allocated for different schedulers, so that a vote score occupied by a scheduler with a high priority has a relatively large weight, and this further enables a vote score counting manner to be more practical. With reference to the first possible implementation of the third aspect, in a third possible implementation of the third aspect, when determining the vote score of each scheduler according to the vote information sent by the at least one scheduler, the selection unit is specifically configured to: determine, for a scheduler, whether the current scheduler votes for another scheduler, where the another scheduler is a remaining scheduler in the cloud computing system other than the current scheduler; and when determining that the current scheduler votes for another scheduler, count a vote score of the current scheduler, or when determining that the current scheduler does not vote for another scheduler, determine that the vote score of the current scheduler is zero. This embodiment of the present invention can avoid that a scheduler with a high priority is always elected as the primary scheduler.

With reference to the first possible implementation of the third aspect, in a fourth possible implementation, the determining, by the arbiter, a vote score of each scheduler according to the vote information sent by the at least one scheduler includes directly counting, by the arbiter, the vote score of each scheduler. In the foregoing manner, the score of each scheduler can be quickly determined.

With reference to any one of the third aspect or the first to the fourth possible implementations of the third aspect, the apparatus further includes: a re-selection unit, and the re-selection unit is specifically configured to: receive a re-election request sent by a secondary scheduler, where the secondary scheduler is another scheduler in the cloud computing system other than the primary scheduler, and the re-election request is sent by the secondary scheduler when scheduling performed by the current primary scheduler on a computing resource in the cloud computing system does not satisfy a preset condition; and when a proportion of the secondary scheduler that sends the re-election request satisfies a preset condition, send a re-election instruction to all the schedulers, so that all the schedulers re-vote according to the current load status of the cloud computing system. In this embodiment of the present invention, the primary scheduler may be re-selected when the current load status of the cloud computing system does not match the primary scheduler, so that the selected primary scheduler always matches a load status of the cloud computing system.

According to a fourth aspect, an apparatus for determining a primary scheduler from a cloud computing system is provided. The cloud computing system includes at least an arbiter, and the apparatus includes: a load determining unit, configured to determine a current load status of the cloud computing system; a vote information determining unit, configured to determine vote information according to the current load status of the cloud computing system and a preset correspondence between a load status and vote information, where in the current load status of the cloud computing system, a scheduler corresponding to a vote result determined according to the vote information is a scheduler that matches the current load status; and a sending unit, configured to send the vote information to the arbiter, so that the arbiter determines a primary scheduler according to the vote information, where the primary scheduler is configured to perform, according to a corresponding scheduling policy, scheduling on a computing resource in the cloud computing system. In this embodiment of the present invention, each scheduler can select a scheduler that matches the current load status, and report vote information for the matched scheduler, so that the primary scheduler selected by the arbiter matches the load status of the whole cloud computing system.

With reference to the fourth aspect, in a first possible implementation of the fourth aspect, the apparatus further includes: a collection unit, configured to periodically collect a load status of the cloud computing system; and a report unit, configured to: when a current load status of the cloud computing system does not satisfy a preset condition, report re-vote information to the arbiter, so that the arbiter triggers, according to the re-vote information, all schedulers in the cloud computing system to re-send vote information. In this embodiment of the present invention, the primary scheduler may be re-selected when the current load status of the cloud computing system does not match the primary scheduler, so that the selected primary scheduler always matches a load status of the cloud computing system.

According to a fifth aspect, a cloud computing system is provided. The cloud computing system includes an arbiter and a scheduler; where the scheduler is configured to: determine a current load status of the cloud computing system, determine vote information according to the current load status of the cloud computing system and a preset correspondence between a load status and vote information, and send the vote information to the arbiter; and the arbiter is configured to: receive vote information sent by at least one scheduler, and select one scheduler from multiple schedulers as a primary scheduler according to the vote information sent by the at least one scheduler, so that the primary scheduler performs, according to a corresponding scheduling policy, scheduling on a computing resource in the cloud computing system, where the scheduling policy corresponding to the primary scheduler matches the current load status of the cloud computing system. For a more specific implementation method in the third aspect, the fourth aspect, the fifth aspect, and implementations of these aspects, mutual reference may be made to the foregoing aspects or implementations.

It can be learned from the foregoing that, in the embodiments of the present invention, the scheduler first determines the current load status of the whole cloud computing system, and then determines the vote information according to the current load status. The arbiter selects, from the multiple schedulers of the cloud computing system according to the respective vote information of the multiple schedulers, the scheduler that matches the current load status as the primary scheduler. The primary scheduler performs, according to its corresponding scheduling policy, scheduling on a computing resource in the cloud computing system. Therefore, the primary scheduler is determined by using the arbiter. The secondary scheduler in the whole cloud computing system other than the primary scheduler no longer performs scheduling on a computing resource. This can ensure that, when a scheduler is required to perform scheduling, only one scheduler in the whole cloud computing system performs scheduling work, thereby avoiding a computing resource scheduling collision problem between different schedulers.

Because the vote information of each scheduler is generated according to the current load status of the system, the selected scheduler can adapt to the current load status of the system, thereby improving pertinence of the primary scheduler and enhancing scheduling performance of the cloud computing system.

In addition, because the primary scheduler is selected according to a vote of each scheduler, the arbiter can determine the primary scheduler only according to vote information without according to a feature of each scheduler, thereby implementing decoupling between the arbiter and each scheduler. The arbiter schedules all of the various schedulers, and the scheduler can be flexibly changed, increased, and reduced. This improves flexibility of the system.

### BRIEF DESCRIPTION OF DRAWINGS

FIG. 1 is a schematic diagram of a cloud computing system according to an embodiment of the present invention;
FIG. 2 is another schematic diagram of a cloud computing system according to an embodiment of the present invention;
FIG. 3 is a schematic diagram of a cloud computing system according to an embodiment of the present invention;
FIG. 4 is a schematic diagram of a method for determining a primary scheduler from a cloud computing system according to an embodiment of the present invention;
FIG. 5 is a schematic diagram of a cloud computing system according to an embodiment of the present invention;
FIG. 6 is a schematic diagram of a cloud computing system according to an embodiment of the present invention;
FIG. 7 is a schematic diagram of a cloud computing system according to an embodiment of the present invention;
FIG. 8 is a schematic diagram of an apparatus for determining a primary scheduler from a cloud computing system according to an embodiment of the present invention;
FIG. 9 is a schematic diagram of an apparatus for determining a primary scheduler from a cloud computing system according to an embodiment of the present invention;
FIG. 10 is a schematic diagram of a cloud computing system according to an embodiment of the present invention;
FIG. 11 is a schematic diagram of an arbiter according to an embodiment of the present invention; and
FIG. 12 is a schematic diagram of a scheduler according to an embodiment of the present invention.

### DESCRIPTION OF EMBODIMENTS

The following clearly and completely describes the technical solutions in the embodiments of the present invention with reference to the accompanying drawings in the embodiments of the present invention. Apparently, the described embodiments are merely some but not all of the embodiments of the present invention.

The present invention provides a method and an apparatus for determining a primary scheduler from a cloud computing system. As shown in FIG. 1, an application scenario of the method and the apparatus is as follows.

Cloud computing emerges as the Internet rapidly develops. The cloud computing is a computing mode. As shown in FIG. 1, a whole cloud computing system mainly includes a client, a scheduler, and a resource pool. The scheduler can receive a request of the client, and schedule, according to the request of the client, a computing resource in the resource pool for the client to use.

Currently, a single scheduler is usually used in the cloud computing system shown in FIG. 1, that is, there is only one scheduler in the cloud computing system. However, as the cloud computing system bears increasing types of services, the scheduler in the cloud computing system also gradually evolves from a single scheduler to multiple schedulers. In the cloud computing system with multiple schedulers, each scheduler is corresponding to one scheduling policy, and is configured to perform scheduling on a computing resource in the cloud computing system.

In actual application, in a cloud computing system with multiple schedulers, different schedulers operate independently, that is, different schedulers independently perform scheduling on a computing resource in the cloud computing system. Therefore, the foregoing method may cause a computing resource scheduling collision between different schedulers.

### Embodiment 1

Based on the foregoing application scenario, the present invention provides a method for determining a primary scheduler from a cloud computing system. A core idea of the method is: A current load status of the whole cloud computing system is first determined, and a scheduler that matches the current load status is selected from multiple schedulers of the cloud computing system as a primary scheduler. The primary scheduler performs, according to its corresponding scheduling policy, scheduling on a computing resource in the cloud computing system. A secondary scheduler in the whole cloud computing system other than the primary scheduler no longer performs scheduling on a computing resource. This can ensure that only one scheduler in the whole cloud computing system performs scheduling work at all moments, thereby avoiding a resource scheduling collision problem between different schedulers.

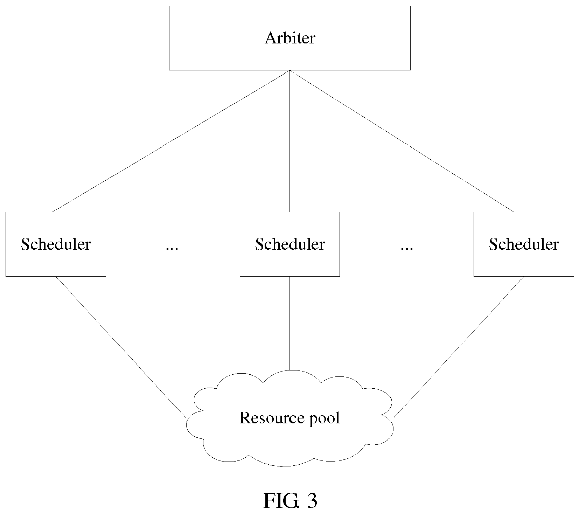

The present invention first provides a cloud computing system. As shown in FIG. 3, the system includes at least an arbiter, multiple schedulers, and a resource pool.

The resource pool is configured to provide a computing resource. Each scheduler is corresponding to one scheduling policy, and is configured to perform, according to its corresponding scheduling policy, scheduling on a computing resource in the resource pool. The arbiter is configured to select one scheduler from the multiple schedulers as a primary scheduler. The scheduler selected as the primary scheduler performs, according to its corresponding scheduling policy, scheduling on a computing resource in the resource pool. A scheduler not selected as the primary scheduler is referred to as a secondary scheduler, and stops performing scheduling on a computing resource in the resource pool. For example, the whole cloud computing system includes three schedulers: a scheduler A, a scheduler B, and a scheduler C. The scheduler A is corresponding to a scheduling policy A, the scheduler B is corresponding to a scheduling policy B, and the scheduler C is corresponding to a scheduling policy C. In this case, if the arbiter selects the scheduler A as the primary scheduler, the scheduler B and the scheduler C are secondary schedulers. In the whole cloud computing system, the scheduler A performs, according to its corresponding scheduling policy A, scheduling on a computing resource in the resource pool. As the secondary schedulers, the scheduler B and the scheduler C stop performing scheduling on a computing resource in the resource pool.

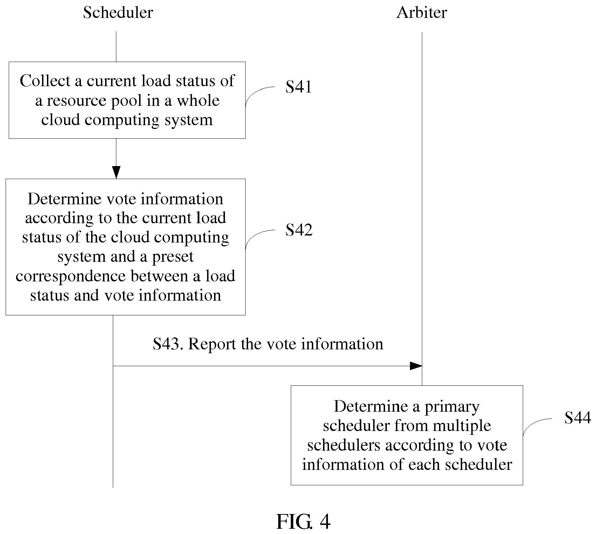

With the cloud computing system shown in FIG. 3, as shown in FIG. 4, the scheduling method provided in the present invention is specifically as follows.

Step S41: A scheduler obtains a current load status of the resource pool in the whole cloud computing system.

The current load status of the resource pool is a current load status of various types of resources of each server in the resource pool. The current load status may be embodied as some specific parameters. When a parameter satisfies a specific condition (for example, satisfies a specific threshold), the load status of the resource pool is considered as being in a specific load status. The resource pool may also be monitored to determine whether a specific trigger event occurs, so that the resource pool satisfies a condition of a load status. In a specific embodiment, the load status may be measured by using an overall resource load status of all servers in the resource pool, such as total load of one or more types of resources on all servers in the resource pool, or an average value or a weighted average value (which may be used to measure a load status of a resource or measure whether a type of resource is a main consumed resource) of proportions of the total load in a total resource quantity, or a difference between load of one or more types of resources in the current resource pool and load of another resource (usually used to measure resource load balance). In some other specific embodiments, it may also be determined whether the load status is a preset load status according to whether some of the servers trigger a specific condition. For example, resource load of some servers is greater than a specific threshold (which may be used to determine a load balance status of a server in the resource pool), or occupation of a type of resource of some servers exceeds a specific threshold (which may be used to determine resource type allocation balance of a server in the resource pool).

The load status of the resource pool may be obtained by a scheduler by performing active collection, or the load status of the resource pool may be collected by using a functional node in another cloud computing system and then sent to a scheduler. Collection or detection of a resource load status may be practiced by using the prior art, for example, determined according to resource load information actively reported by each server, determined by means of calculation when a management node performs task allocation, or evaluated by monitoring data traffic between servers.

Step S42: The scheduler determines vote information according to the current load status of the cloud computing system and a preset correspondence between a load status and vote information.

In this embodiment of the present invention, correspondences preset in all schedulers between a load status and vote information may be the same or different. A relevant person skilled in the art may voluntarily set a correspondence between a load status and vote information according to a requirement.

In this embodiment of the present invention, the vote information is vote information of a current scheduler that is at least one scheduler in the multiple schedulers. The vote information may be specifically an identifier of a voted scheduler or a score of a voted scheduler. For example, in this embodiment of the present invention, the preset correspondences between a load status and vote information are "load 1-scheduler 1, load 2-scheduler 2, and load 3-scheduler 3". When current load of the cloud computing system is 1, a scheduler obtained by the current scheduler by matching is the "scheduler 1". The "scheduler 1" is specifically an identifier of a voted scheduler. For another example, the preset correspondences between a load status and vote information are "load 1-5 points for a scheduler 1, load 2-6 points for a scheduler 2, and load 3-10 points for a scheduler 3". When the current load of the whole cloud computing system is the load 1, vote information obtained by the scheduler by matching is "5 points for a scheduler 1". "5 points for a scheduler 1" is specifically a score of the voted scheduler.

Step S43: The scheduler reports the vote information to the arbiter.

Step S44: The arbiter determines a primary scheduler from the multiple schedulers, and a remaining scheduler as a secondary scheduler according to vote information of each scheduler, where the primary scheduler performs, according to its corresponding scheduling policy, scheduling on a computing resource in the resource pool, and the secondary scheduler stops performing scheduling on a computing resource in the resource pool.

In this embodiment of the present invention, specifically, the primary scheduler may be selected from the multiple schedulers by using the following method:

First, the arbiter determines a vote score of each scheduler according to the vote information of each scheduler, and then determines, from the multiple schedulers, a scheduler whose vote score satisfies a preset condition as the primary scheduler. The preset condition satisfied by the score of the primary scheduler may be voluntarily set by a person skilled in the art. For example, the preset condition may be set to that a scheduler with a highest score is the primary scheduler, or a scheduler with a lowest score is the primary scheduler, or a scheduler whose vote score is in a specific interval is the primary scheduler. Details are not described herein.

In this embodiment of the present invention, "the preset condition is that a scheduler with a highest score is the primary scheduler" is used as an example to describe in detail a process of "selecting the primary scheduler".

First manner: This manner may be specifically corresponding to that the vote information is an identifier of a voted scheduler, and is specifically: Different priorities are manually preset for all schedulers; and the arbiter sets, when receiving the vote information of each scheduler, a different weight for each piece of vote information according to a priority of a scheduler that sends the vote information; then, determines the vote score of each scheduler according to the vote information obtained by each scheduler and the weight of each piece of vote information; and finally, selects a scheduler with a highest score from the multiple schedulers as the primary scheduler.

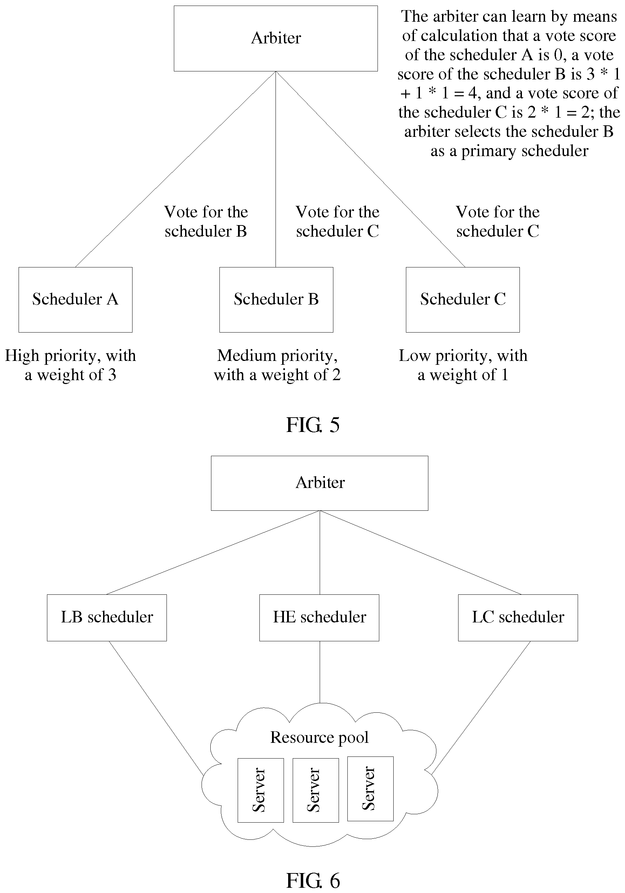

For example, as shown in FIG. 5, a whole cloud computing system includes three schedulers: a scheduler A, a scheduler B, and a scheduler C. A high priority is preset for the scheduler A, a medium priority is preset for the scheduler B, and a low priority is preset for the scheduler C. In addition, a vote weight of the scheduler A is set to 3, a vote weight of the scheduler B is set to 2, and a vote weight of the scheduler C is set to 1. Moreover, the scheduler A votes for the scheduler B, the scheduler B votes for the scheduler C, and the scheduler C votes for the scheduler B. The arbiter calculates the vote score of each scheduler after receiving the vote information of each of the foregoing schedulers. The following can be obtained by means of calculation: A vote score of the scheduler A is 0, a vote score of the scheduler B is 3 ^{∗} 1 + 1 ^{∗} 1 = 4, and a vote score of the scheduler C is 2 ^{∗} 1 = 2. It can be learned that, in the foregoing three schedulers, the score of the scheduler B is highest, and therefore the arbiter selects the scheduler B as the primary scheduler.

Second manner: This manner may be corresponding to that the vote information is a score of a voted scheduler, and is specifically: The arbiter directly counts the score of each scheduler. Still in the foregoing example, the whole cloud computing system includes three schedulers: the scheduler A, the scheduler B, and the scheduler C. Vote information of the scheduler A is "5 points for the scheduler B", vote information of the scheduler B is "3 points for the scheduler C", and vote information of the scheduler C is "6 points for the scheduler C". Therefore, it can be counted that, a vote score of the scheduler B is 5 points, a vote score of the scheduler C is 5 + 3 = 8 points, and a vote score of the scheduler A is 0.

Second manner: This manner may be corresponding to that the vote information is an identifier of a voted scheduler and a score of the voted scheduler, and is specifically: Each scheduler sends at least two pieces of vote information to the arbiter. One piece of vote information votes for itself and indicates that the current scheduler participates in an election, and the other piece of vote information votes for another scheduler, and the another scheduler is a remaining scheduler in the cloud computing system other than the current scheduler.

After receiving vote information of a scheduler, the arbiter first determines whether the current scheduler votes for another scheduler, and if the current scheduler votes for another scheduler, counts a vote score of the current scheduler, or if the current scheduler does not vote for another scheduler, determines that the score of the current scheduler is zero.

A manner disclosed in the foregoing first manner or the second common addition manner may be specifically used to count a vote score of a scheduler.

By using the foregoing manner, when a scheduler votes only for itself, the arbiter determines a vote score of the scheduler as zero, thereby avoiding a case that a scheduler votes only for itself.

It can be learned from the foregoing that, in this embodiment of the present invention: The current load status of the whole cloud computing system is first determined, and a scheduler that matches the current load status is selected as the primary scheduler from the multiple schedulers of the cloud computing system. The primary scheduler performs, according to its corresponding scheduling policy, scheduling on a computing resource in the cloud computing system. A secondary scheduler in the whole cloud computing system other than the primary scheduler no longer performs scheduling on a computing resource. This can ensure that only one scheduler in the whole cloud computing system performs scheduling work at all moments, thereby avoiding a computing resource scheduling collision problem between different schedulers.

### Embodiment 2

In this embodiment of the present invention, after a primary scheduler is selected in a whole cloud computing system by using the method disclosed in Embodiment 1, the primary scheduler performs, according to its corresponding scheduling policy, scheduling on a computing resource in a resource pool. A secondary scheduler not selected as the primary scheduler monitors a load status of the whole cloud computing system in real time, and reports re-vote information to an arbiter when the load status does not satisfy a condition preset by the secondary schedule. When a proportion of a scheduler that sends the re-vote information satisfies a preset condition, the arbiter sends a re-election instruction to all schedulers. The schedulers re-send vote information by using the manner disclosed in Embodiment 1. The arbiter re-elects a primary scheduler, so that the elected primary scheduler matches a current load status of the cloud computing system.

### Embodiment 3

A process of the present invention is described in detail below by using a whole cloud computing system including three schedulers, one arbiter, and one resource pool as an example.

First, as shown in FIG. 6, in actual application, the resource pool may specifically include multiple servers, and each server provides some computing resources. The foregoing three schedulers may be specifically an LB (Load Balanc, load balancing) scheduler, an LC (Load Consolidation, load consolidation) scheduler, and an HE (Hotspot Elimination, hotspot elimination) scheduler. A scheduling policy corresponding to the LB scheduler is an LB scheduling policy, a scheduling policy corresponding to the LC scheduler is an LC scheduling policy, and a scheduling policy corresponding to the HE scheduler is an HE scheduling policy.

The foregoing LB scheduling policy may be specifically: when a service is allocated to a server, trying to ensure load balance of each server in the resource pool.

The LC scheduling policy may be specifically: when load of a server in the resource pool is lower than a preset lowest value, migrating a service of the server to another server in the resource pool, and powering off the server.

The HE scheduling policy may be specifically: when load of a server in the resource pool exceeds a preset highest value, migrating some services of the server to another server in the resource pool, to reduce the load of the current server.

In this embodiment of the present invention, it is assumed that a high priority is set for the HE scheduler, a medium priority is set for the LB scheduler, and a low priority is set for the LC scheduler. In addition, a weight of vote information of the high-priority HE scheduler is set to 3, a weight of vote information of the medium-priority LB scheduler is set to 2, and a weight of vote information of the low-priority LC scheduler is set to 1.

In this embodiment of the present invention, a person skilled in the art may voluntarily set an internal vote policy of each scheduler. It is assumed that, in this embodiment of the present invention, vote policies of the HE scheduler, the LB scheduler, and the LC scheduler are respectively as follows:
Vote policy of the HE scheduler: vote for the HE when current load of the cloud computing system is greater than Th;
vote for the LC when the current load of the cloud computing system is less than T1; and
vote for the LB when the current load of the cloud computing system is greater than or equal to T1, and is less than or equal to Th.

Vote policy of the LB scheduler: vote for the LC when the current load of the cloud computing system is less than T1; and
vote for the LB when the current load of the cloud computing system is greater than or equal to T1.

Vote policy of the LC scheduler: vote for the LC when the current load of the cloud computing system is less than T1 and lasts for m minutes; and
skip voting when the current load of the cloud computing system is greater than or equal to T1.

In this embodiment of the present invention, it is assumed that a current load status of the whole cloud computing system is less than T1 and lasts for m minutes. According to the foregoing vote policies, it may be determined that vote information of the HE scheduler is "vote for the LC", vote information of the LB scheduler is "vote for the LC", and vote information of the LC scheduler is "vote for the LC".

After the arbiter receives the foregoing vote information of each scheduler, it may be determined that a vote score of the LC scheduler is 6 = 3 ^{∗} 1 + 2 ^{∗} 1 + 1 ^{∗} 1, and vote scores of the HE scheduler and the LB scheduler are both 0. In this case, the arbiter selects the LC scheduler as a primary scheduler, and the HE scheduler and the LB scheduler as secondary schedulers. In this case, the LC scheduler performs, according to the foregoing LC scheduling policy, scheduling on a computing resource in the resource pool, and the HE scheduler and the LB scheduler stop scheduling work.

After the LC scheduler is selected as the primary scheduler, the LC scheduler and the LB scheduler monitor the current load status of the cloud computing system in real time. When the current load of the cloud computing system does not satisfy a condition, for example, when the current load is greater than Th, the LB scheduler and the LC scheduler may send a re-election request to the arbiter. When a proportion of a scheduler that sends the re-election request is greater than a specific value, the arbiter triggers all schedulers to perform re-election. For example, when the proportion of a scheduler that sends the re-election request accounts for 60% of all schedulers in the cloud system, re-election is performed.

It can be learned from the foregoing that, in this embodiment of the present invention, the foregoing method can ensure that only one scheduler in the whole cloud computing system operates at all moments, thereby avoiding a scheduling collision problem between different schedulers.

### Embodiment 4

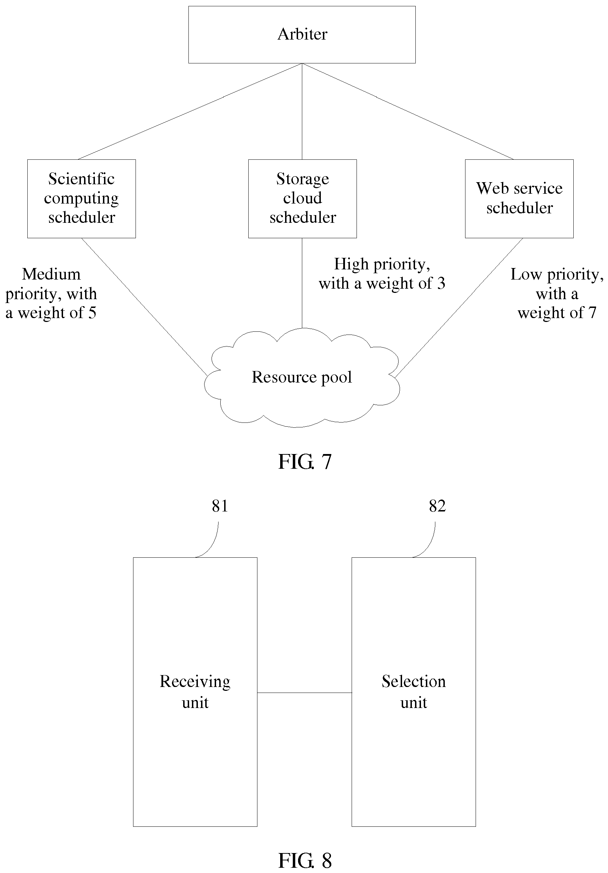

In this embodiment of the present invention, as shown in FIG. 7, a process of the present invention is described in detail by using an example in which a whole cloud computing system includes three schedulers, one arbiter, and one resource pool, and the three schedulers are respectively a scientific computing scheduler, a storage cloud scheduler, and a web service scheduler.

The scientific computing scheduler is used to schedule a computing resource for a scientific computing service. A scheduling policy corresponding to the scientific computing scheduler is providing sufficient CPU resources for the scientific computing service. A priority corresponding to the scientific computing scheduler is 5. The storage cloud scheduler is used to schedule a computing resource for a storage cloud service. A scheduling policy corresponding to the storage cloud scheduler is trying to balance disk input/output and a disk capacity to reduce a fragment. A priority corresponding to the storage cloud scheduler is 3. The web service scheduler is used to schedule a computing resource for a web service. A scheduling policy corresponding to the web service scheduler is providing sufficient CPU and network resources for a current service. A priority corresponding to the web service scheduler is 7.

In this embodiment of the present invention, the foregoing there schedulers may separately collect a current load status of the cloud computing system. Current load of the cloud computing system may specifically include disk load and network load of the cloud computing system.

In this embodiment of the present invention, the scheduling policies of the foregoing three schedulers may be respectively as follows:
Scientific computing scheduler: 1. Vote for the scientific computing scheduler. 2. Vote for the storage cloud scheduler when a remaining disk resource in the resource pool is higher than Rs, or vote for the web service scheduler when the remaining disk resource in the resource pool is lower than or equal to Rs.
Storage cloud scheduler: 1. Vote for the storage cloud scheduler. 2. Vote for the web service scheduler when a remaining network resource in the resource pool is lower than Rw, or vote for the scientific computing scheduler when the remaining network resource in the resource pool is higher than or equal to Rw.
Web service scheduler: 1. Vote for the web service scheduler. 2. Vote for the storage cloud scheduler when a remaining network resource in the resource pool is higher than Rs, or vote for the scientific computing scheduler when the remaining network resource in the resource pool is lower than or equal to Rs.

First, it should be noted that, in this embodiment of the present invention, each scheduler may have two votes: One vote is for the scheduler itself, which indicates that the current scheduler participates in an election, and the other vote is for another scheduler that matches the current load status.

In this embodiment of the present invention, the process of the present invention is described in detail by using an example in which in the current load status of the cloud computing system, the remaining disk resource is higher than Rs, and the remaining network resource is lower than Rw in the cloud computing system.

Specifically, corresponding to a vote policy of each of the foregoing schedulers, vote information of the scientific computing scheduler may be specifically: voting for itself, that is, voting for the scientific computing scheduler, and voting for the storage cloud scheduler. Vote information of the storage cloud scheduler may be specifically: voting for itself, that is, voting for the storage cloud scheduler, and voting for the web service scheduler. Vote information of the web service scheduler may be specifically: voting for itself, that is, voting for the web service scheduler, and voting for the storage cloud scheduler.

When the arbiter receives vote information of each scheduler, specifically, the arbiter may first determine whether the current scheduler votes for itself, and if the current scheduler votes for itself, determine that the current scheduler is qualified for an election, or if the current scheduler does not vote for itself, determine that the current scheduler is unqualified for the election, and stop counting a score of the current scheduler. Then, the arbiter determines whether each scheduler votes for another scheduler, and if the current scheduler votes for another scheduler, counts a score of the current scheduler, or if the current scheduler does not vote for another scheduler, determines that a score of the current scheduler is zero. The foregoing manner can avoid that a scheduler with a high priority votes only for itself and does not vote for another scheduler, and can further avoid that a scheduler with a high priority is always elected as a primary scheduler.

In this embodiment of the present invention, still in the foregoing example, the arbiter may learn that the foregoing three schedulers all vote for themselves, all have an election resource, and all vote for another scheduler. Therefore, scores of all the schedulers can be properly counted. Specifically, by using the calculation manner in Embodiment 1, it may be learned that a vote score of the scientific computing scheduler is: 5 ^{∗} 1 = 5, a vote score of the storage cloud scheduler is: 5 ^{∗} 1 + 3 ^{∗} 1 + 7 ^{∗}1 = 15, and a vote score of the web service scheduler is: 3 ^{∗} 1 + 7 ^{∗} 1 = 10.

In this embodiment of the present invention, if a scheduler with a highest score is selected as the primary scheduler, it can be learned that, in this embodiment of the present invention, the storage cloud scheduler is elected as the primary scheduler, and the scientific computing scheduler and the web service scheduler are secondary schedulers. The storage cloud scheduler performs, according to its corresponding scheduling policy, scheduling on a computing resource in the resource pool. As secondary schedulers, the scientific computing scheduler and the web service scheduler may monitor the current load status of the resource pool in real time. The load status includes a disk resource status and a network resource status. Once a scheduler finds that the current load status of the resource pool does not satisfy a condition of the scheduler, the scheduler sends a re-election request to the arbiter. When a specific proportion of a scheduler that sends the re-election request is reached, the arbiter triggers all schedulers to perform re-election.

It can be learned from the foregoing that, in this embodiment of the present invention, the foregoing method can ensure that only one scheduler in the whole cloud computing system operates at all moments, thereby avoiding a scheduling collision problem between different schedulers.

### Embodiment 5

Same as the foregoing conception, the present invention further provides an apparatus for determining a primary scheduler from a cloud computing system. As shown in FIG. 8, the apparatus includes:
a receiving unit 81, configured to receive vote information sent by at least one scheduler, where the vote information is generated by the scheduler according to a current load status of the cloud computing system and a preset correspondence between a load status and vote information; and
a selection unit 82, configured to determine a primary scheduler from the multiple schedulers according to the vote information sent by the at least one scheduler, so that the primary scheduler performs, according to a corresponding scheduling policy, scheduling on a computing resource in the cloud computing system, where the scheduling policy corresponding to the primary scheduler matches the current load status of the cloud computing system.

Optionally, the selection unit is specifically configured to: determine a vote score of each scheduler according to the vote information sent by the at least one scheduler; and determine, from the multiple schedulers, a scheduler whose vote score satisfies a preset condition as the primary scheduler.

Optionally, different priorities are preset for different schedulers, and when determining the vote score of each scheduler according to the vote information sent by the at least one scheduler, the selection unit is specifically configured to:
set different weights for vote information of all schedulers according to priorities of all the schedulers; and determine the vote score of each scheduler according to vote information obtained by each scheduler and a weight of each piece of vote information.

Optionally, when determining the vote score of each scheduler according to the vote information sent by the at least one scheduler, the selection unit is specifically configured to: determine, for a scheduler, whether the current scheduler votes for another scheduler, where the another scheduler is a remaining scheduler in the cloud computing system other than the current scheduler; and when determining that the current scheduler votes for another scheduler, count a vote score of the current scheduler, or when determining that the current scheduler does not vote for another scheduler, determine that the vote score of the current scheduler is zero.

Optionally, the apparatus further includes a re-selection unit, specifically configured to: receive a re-election request sent by a secondary scheduler, where the secondary scheduler is another scheduler in the cloud computing system other than the primary scheduler, and the re-election request is sent by the secondary scheduler when scheduling performed by the current primary scheduler on a computing resource in the cloud computing system does not satisfy a preset condition; and when a proportion of the secondary scheduler that sends the re-election request satisfies a preset condition, send a re-election instruction to all the schedulers, so that all the schedulers re-vote according to the current load status of the cloud computing system.

It can be learned from the foregoing that, in this embodiment of the present invention: The current load status of the whole cloud computing system is first determined, and a scheduler that matches the current load status is selected as the primary scheduler from the multiple schedulers of the cloud computing system. The primary scheduler performs, according to its corresponding scheduling policy, scheduling on a computing resource in the cloud computing system. A secondary scheduler in the whole cloud computing system other than the primary scheduler no longer performs scheduling on a computing resource. This can ensure that only one scheduler in the whole cloud computing system performs scheduling work at all moments, thereby avoiding a computing resource scheduling collision problem between different schedulers.

### Embodiment 6

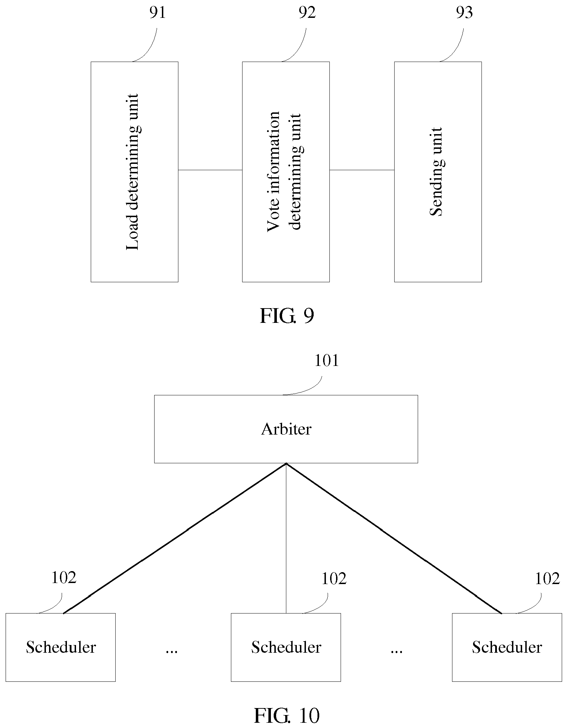

Same as the foregoing conception, the present invention further provides an apparatus for determining a primary scheduler from a cloud computing system. As shown in FIG. 9, the apparatus includes:
a load determining unit 91, configured to determine a current load status of the cloud computing system;
a vote information determining unit 92, configured to determine vote information according to the current load status of the cloud computing system and a preset correspondence between a load status and vote information, where in the current load status of the cloud computing system, a scheduler corresponding to a vote result determined according to the vote information is a scheduler that matches the current load status; and
a sending unit 93, configured to send the vote information to the arbiter, so that the arbiter determines a primary scheduler according to the vote information, where the primary scheduler is configured to perform, according to a corresponding scheduling policy, scheduling on a computing resource in the cloud computing system.

Optionally, the apparatus further includes: a collection unit, configured to periodically collect a load status of the cloud computing system; and a report unit, configured to: when a current load status of the cloud computing system does not satisfy a preset condition, report re-vote information to the arbiter, so that the arbiter triggers, according to the re-vote information, all schedulers in the cloud computing system to re-send vote information.

It can be learned from the foregoing that, in this embodiment of the present invention: The current load status of the whole cloud computing system is first determined, and a scheduler that matches the current load status is selected as the primary scheduler from the multiple schedulers of the cloud computing system. The primary scheduler performs, according to its corresponding scheduling policy, scheduling on a computing resource in the cloud computing system. A secondary scheduler in the whole cloud computing system other than the primary scheduler no longer performs scheduling on a computing resource. This can ensure that only one scheduler in the whole cloud computing system performs scheduling work at all moments, thereby avoiding a computing resource scheduling collision problem between different schedulers.

### Embodiment 7

Same as the foregoing conception, the present invention further provides a cloud computing system. As shown in FIG. 10, the cloud computing system includes one arbiter 101 and multiple schedulers 102.

The scheduler 102 is configured to: determine a current load status of the cloud computing system, determine vote information according to the current load status of the cloud computing system and a preset correspondence between a load status and vote information, and send the vote information to the arbiter.

The arbiter 101 is configured to: receive vote information sent by at least one scheduler, and select one scheduler from multiple schedulers as a primary scheduler according to the vote information sent by the at least one scheduler, so that the primary scheduler performs, according to a corresponding scheduling policy, scheduling on a computing resource in the cloud computing system, where the scheduling policy corresponding to the primary scheduler matches the current load status of the cloud computing system.

It can be learned from the foregoing that, in this embodiment of the present invention: The current load status of the whole cloud computing system is first determined, and a scheduler that matches the current load status is selected as the primary scheduler from the multiple schedulers of the cloud computing system. The primary scheduler performs, according to its corresponding scheduling policy, scheduling on a computing resource in the cloud computing system. A secondary scheduler in the whole cloud computing system other than the primary scheduler no longer performs scheduling on a computing resource. This can ensure that only one scheduler in the whole cloud computing system performs scheduling work at all moments, thereby avoiding a computing resource scheduling collision problem between different schedulers.

### Embodiment 8

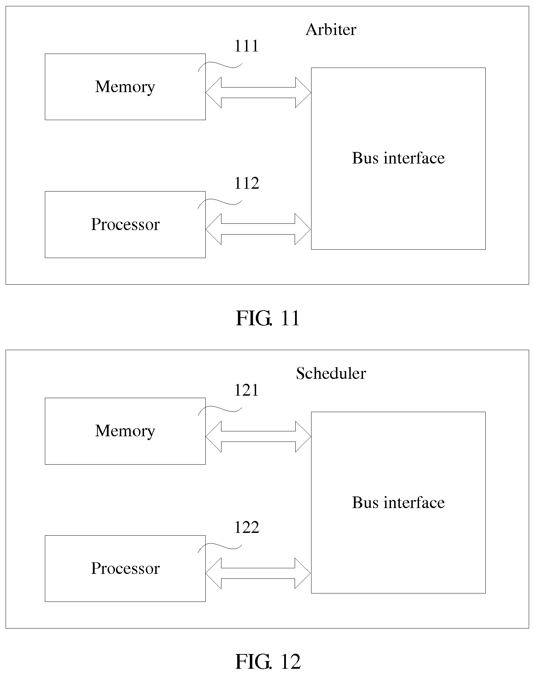

Same as the foregoing conception, the present invention further provides an arbiter. As shown in FIG. 11, the arbiter includes at least a memory 111 and a processor 112.

The memory 111 is configured to store a program and an instruction.

The processor 112 is configured to: by invoking the program and the instruction stored in the memory, execute the following operations:
receiving vote information sent by at least one scheduler, where the vote information is generated by the scheduler according to a current load status of the cloud computing system and a preset correspondence between a load status and vote information; and
determining a primary scheduler from multiple schedulers according to the vote information sent by the at least one scheduler, so that the primary scheduler performs, according to a corresponding scheduling policy, scheduling on a computing resource in the cloud computing system, where the scheduling policy corresponding to the primary scheduler matches the current load status of the cloud computing system.

Same as the foregoing conception, as shown in FIG. 12, the present invention further provides a scheduler. The scheduler includes at least a memory 121 and a processor 122.

The memory 121 is configured to store a program and an instruction.

The processor 122 is configured to: by invoking the program and the instruction stored in the memory, execute the following operations:
determining a current load status of the cloud computing system;
determining vote information according to the current load status of the cloud computing system and a preset correspondence between a load status and vote information, where in the current load status of the cloud computing system, a scheduler determined according to vote information of the multiple schedulers is a scheduler that matches the current load status; and
sending the vote information to an arbiter, so that the arbiter determines a primary scheduler according to the vote information, where the primary scheduler is configured to perform, according to a corresponding scheduling policy, scheduling on a computing resource in the cloud computing system.

A bus architecture may include any quantity of interconnected buses and bridges, and specifically link various circuits of one or more processors represented by the processor and one or more memories represented by the memory. The bus architecture may further link various other circuits such as a peripheral device, a voltage regulator, and a power management circuit, which is well known in the art, and therefore no further description is provided in this specification. A bus interface provides an interface. The processor is responsible for managing the bus architecture and general processing. The memory may store data used when the processor executes an operation.

It can be learned from the foregoing that, in this embodiment of the present invention: The current load status of the whole cloud computing system is first determined, and a scheduler that matches the current load status is selected as the primary scheduler from the multiple schedulers of the cloud computing system. The primary scheduler performs, according to its corresponding scheduling policy, scheduling on a computing resource in the cloud computing system. A secondary scheduler in the whole cloud computing system other than the primary scheduler no longer performs scheduling on a computing resource. This can ensure that only one scheduler in the whole cloud computing system performs scheduling work at all moments, thereby avoiding a computing resource scheduling collision problem between different schedulers.

A person skilled in the art should understand that the embodiments of the present invention may be provided as a method, a system, or a computer program product. Therefore, the present invention may use a form of hardware only embodiments, software only embodiments, or embodiments with a combination of software and hardware. Moreover, the present invention may use a form of a computer program product that is implemented on one or more computer-usable storage media (including but not limited to a disk memory, a CD-ROM, an optical memory, and the like) that include computer-usable program code.

The present invention is described with reference to the flowcharts and/or block diagrams of the method, the device (system), and the computer program product according to the embodiments of the present invention. It should be understood that computer program instructions may be used to implement each process and/or each block in the flowcharts and/or the block diagrams and a combination of a process and/or a block in the flowcharts and/or the block diagrams. These computer program instructions may be provided for a general-purpose computer, a dedicated computer, an embedded processor, or a processor of any other programmable data processing device to generate a machine, so that the instructions executed by a computer or a processor of any other programmable data processing device generate an apparatus for implementing a specific function in one or more processes in the flowcharts and/or in one or more blocks in the block diagrams.

These computer program instructions may be stored in a computer readable memory that can instruct the computer or any other programmable data processing device to work in a specific manner, so that the instructions stored in the computer readable memory generate an artifact that includes an instruction apparatus. The instruction apparatus implements a specific function in one or more processes in the flowcharts and/or in one or more blocks in the block diagrams.

These computer program instructions may be loaded onto a computer or another programmable data processing device, so that a series of operations and steps are performed on the computer or the another programmable device, thereby generating computer-implemented processing. Therefore, the instructions executed on the computer or the another programmable device provide steps for implementing a specific function in one or more processes in the flowcharts and/or in one or more blocks in the block diagrams.

Although some preferred embodiments of the present invention have been described, a person skilled in the art can make changes and modifications to these embodiments once they learn the basic inventive concept. Therefore, the following claims are intended to be construed as to cover the preferred embodiments and all changes and modifications falling within the scope of the present invention.

Obviously, a person skilled in the art can make various modifications and variations to the embodiments of the present invention without departing from the spirit and scope of the embodiments of the present invention. The present invention is intended to cover these modifications and variations provided that they fall within the scope of protection defined by the following claims and their equivalent technologies.

## Claims

1. A method for determining a primary scheduler from a cloud computing system, wherein the cloud computing system comprises at least an arbiter and multiple schedulers, each scheduler is corresponding to one scheduling policy, and the method comprises:
receiving, by the arbiter, vote information sent by at least one scheduler, wherein the vote information is generated by the scheduler according to a current load status of the cloud computing system and a preset correspondence between a load status and vote information; and
determining, by the arbiter, a primary scheduler from the multiple schedulers according to the vote information sent by the at least one scheduler, so that the primary scheduler performs, according to a corresponding scheduling policy, scheduling on a computing resource in the cloud computing system, wherein the scheduling policy corresponding to the primary scheduler matches the current load status of the cloud computing system.

2. The method according to claim 1, wherein the determining, by the arbiter, a primary scheduler from the multiple schedulers according to the vote information sent by the at least one scheduler comprises:
determining, by the arbiter, a vote score of each scheduler according to the vote information sent by the at least one scheduler; and
determining, by the arbiter from the multiple schedulers, a scheduler whose vote score satisfies a preset condition as the primary scheduler.

3. The method according to claim 2, wherein different priorities are preset for different schedulers, and the determining, by the arbiter, a vote score of each scheduler according to the vote information sent by the at least one scheduler comprises:
setting, by the arbiter, different weights for vote information of all schedulers according to priorities of all the schedulers; and
determining, by the arbiter, the vote score of each scheduler according to vote information obtained by each scheduler and a weight of each piece of vote information.

4. The method according to claim 2, wherein the determining, by the arbiter, a vote score of each scheduler according to the vote information sent by the at least one scheduler comprises:
determining, by the arbiter for a scheduler, whether the current scheduler votes for another scheduler, wherein the another scheduler is a remaining scheduler in the cloud computing system other than the current scheduler; and
when determining that the current scheduler votes for another scheduler, counting, by the arbiter, a vote score of the current scheduler, or when determining that the current scheduler does not vote for another scheduler, determining, by the arbiter, that the vote score of the current scheduler is zero.

5. The method according to any one of claims 1 to 4, wherein the method further comprises:
receiving, by the arbiter, a re-election request sent by a secondary scheduler, wherein the secondary scheduler is another scheduler in the cloud computing system other than the primary scheduler, and the re-election request is sent by the secondary scheduler when scheduling performed by the current primary scheduler on a computing resource in the cloud computing system does not satisfy a preset condition; and
when a proportion of the secondary scheduler that sends the re-election request satisfies a preset condition, sending, by the arbiter, a re-election instruction to all the schedulers, so that all the schedulers re-vote according to the current load status of the cloud computing system.

6. A method for determining a primary scheduler from a cloud computing system, wherein the cloud computing system comprises at least an arbiter and multiple schedulers, each scheduler is corresponding to one scheduling policy, and the method comprises:
determining, by the scheduler, a current load status of the cloud computing system;
determining, by the scheduler, vote information according to the current load status of the cloud computing system and a preset correspondence between a load status and vote information, wherein in the current load status of the cloud computing system, a scheduler determined according to vote information of the multiple schedulers is a scheduler that matches the current load status; and
sending, by the scheduler, the vote information to the arbiter, so that the arbiter determines a primary scheduler according to the vote information, wherein the primary scheduler is configured to perform, according to a corresponding scheduling policy, scheduling on a computing resource in the cloud computing system.

7. The method according to claim 6, wherein the method further comprises:
periodically collecting, by the scheduler, a load status of the cloud computing system; and
when a current load status of the cloud computing system does not satisfy a preset condition, reporting, by the scheduler, re-vote information to the arbiter, so that the arbiter triggers, according to the re-vote information, all schedulers in the cloud computing system to re-send vote information.

8. An apparatus for determining a primary scheduler from a cloud computing system, wherein the cloud computing system comprises at least multiple schedulers, each scheduler is corresponding to one scheduling policy, and the apparatus comprises:
a receiving unit, configured to receive vote information sent by at least one scheduler, wherein the vote information is generated by the scheduler according to a current load status of the cloud computing system and a preset correspondence between a load status and vote information; and
a selection unit, configured to determine a primary scheduler from the multiple schedulers according to the vote information sent by the at least one scheduler, so that the primary scheduler performs, according to a corresponding scheduling policy, scheduling on a computing resource in the cloud computing system, wherein the scheduling policy corresponding to the primary scheduler matches the current load status of the cloud computing system.

9. The apparatus according to claim 8, wherein the selection unit is specifically configured to:
determine a vote score of each scheduler according to the vote information sent by the at least one scheduler; and
determine, from the multiple schedulers, a scheduler whose vote score satisfies a preset condition as the primary scheduler.

10. The apparatus according to claim 9, wherein different priorities are preset for different schedulers, and when determining the vote score of each scheduler according to the vote information sent by the at least one scheduler, the selection unit is specifically configured to:
set different weights for vote information of all schedulers according to priorities of all the schedulers; and
determine the vote score of each scheduler according to vote information obtained by each scheduler and a weight of each piece of vote information.

11. The apparatus according to claim 9, wherein when determining the vote score of each scheduler according to the vote information sent by the at least one scheduler, the selection unit is specifically configured to:
determine, for a scheduler, whether the current scheduler votes for another scheduler, wherein the another scheduler is a remaining scheduler in the cloud computing system other than the current scheduler; and
when determining that the current scheduler votes for another scheduler, count a vote score of the current scheduler, or when determining that the current scheduler does not vote for another scheduler, determine that the vote score of the current scheduler is zero.

12. The apparatus according to any one of claims 8 to 11, wherein the apparatus further comprises a re-selection unit, and the re-selection unit is specifically configured to:
receive a re-election request sent by a secondary scheduler, wherein the secondary scheduler is another scheduler in the cloud computing system other than the primary scheduler, and the re-election request is sent by the secondary scheduler when scheduling performed by the current primary scheduler on a computing resource in the cloud computing system does not satisfy a preset condition; and
when a proportion of the secondary scheduler that sends the re-election request satisfies a preset condition, send a re-election instruction to all the schedulers, so that all the schedulers re-vote according to the current load status of the cloud computing system.

13. An apparatus for determining a primary scheduler from a cloud computing system, wherein the cloud computing system comprises at least an arbiter, and the apparatus comprises:
a load determining unit, configured to determine a current load status of the cloud computing system;
a vote information determining unit, configured to determine vote information according to the current load status of the cloud computing system and a preset correspondence between a load status and vote information, wherein in the current load status of the cloud computing system, a scheduler corresponding to a vote result determined according to the vote information is a scheduler that matches the current load status; and
a sending unit, configured to send the vote information to the arbiter, so that the arbiter determines a primary scheduler according to the vote information, wherein the primary scheduler is configured to perform, according to a corresponding scheduling policy, scheduling on a computing resource in the cloud computing system.

14. The apparatus according to claim 13, wherein the apparatus further comprises:
a collection unit, configured to periodically collect a load status of the cloud computing system; and
a report unit, configured to: when a current load status of the cloud computing system does not satisfy a preset condition, report re-vote information to the arbiter, so that the arbiter triggers, according to the re-vote information, all schedulers in the cloud computing system to re-send vote information.

15. A cloud computing system, wherein the cloud computing system comprises an arbiter and a scheduler; wherein
the scheduler is configured to: determine a current load status of the cloud computing system, determine vote information according to the current load status of the cloud computing system and a preset correspondence between a load status and vote information, and send the vote information to the arbiter; and
the arbiter is configured to: receive vote information sent by at least one scheduler, and select one scheduler from multiple schedulers as a primary scheduler according to the vote information sent by the at least one scheduler, so that the primary scheduler performs, according to a corresponding scheduling policy, scheduling on a computing resource in the cloud computing system, wherein the scheduling policy corresponding to the primary scheduler matches the current load status of the cloud computing system.
